## Europäisches Patentamt
## European Patent Office
## Office européen des brevets

(11) Numéro de publication: **0 015 847**
A1

(12) # DEMANDE DE BREVET EUROPEEN

(21) Numéro de dépôt: 80400304.4

(22) Date de dépôt: 05.03.80

(51) Int. Cl.³: **B 01 D 50/00**, B 01 D 45/18, B 01 D 46/04

(30) Priorité: 05.03.79 FR 7906186

(71) Demandeur: **SODEXI S.A., 3, rue Julien Videment, F-44000 Nantes (FR)**

(43) Date de publication de la demande: **17.09.80** **Bulletin 80/19**

(72) Inventeur: **Durand, Albert, 35, rue Laure Gatet, F-33000 Bordeaux (FR)**

(84) Etats contractants désignés: **BE DE GB IT SE**

(74) Mandataire: **Trolliet, Jean-Claude, Cabinet BURDIPAT 98, cours de Verdun, F-33000 Bordeaux (FR)**

(54) **Dépoussiéreur d'air à décolmatage automatique.**

(57) L'invention concerne un dépoussiéreur d'air à pré-séparation des particules par force centrifuge et à décolmatage automatique.

Le dépoussiéreur d'air comporte un cylindre extérieur 1 obturé en sa partie basse par un fond 2 horizontal tandis qu'en sa partie supérieure pénètre une enveloppe cylindrique concentrique 3 contenant les éléments filtrants 4 et le dispositif rotatif 5 de distribution d'air de décolmatage insufflé à contre courant de telle sorte que l'air propulsé ou aspiré pénétrant tangentiellement à l'intérieur du cylindre 1 effectue à l'intérieur de celui-ci une double trajectoire, l'une périphérique descendante dont la force centrifuge plaque une partie des particules et l'autre montante et centrale à l'aplomb de l'enveloppe concentrique afin d'être débarrassée des poussières résiduelles, les particules et poussières ainsi extraites ou retenues étant évacuées au travers d'une buse d'éjection 9 placée tangentiellement en partie basse de l'enveloppe 1, lesdites poussières étant rassemblées au moyen d'un bras rotatif 11.

1

## Dépoussiéreur d'air à décolmatage automatique

La présente invention concerne un dépoussiéreur d'air à pré-séparation des particules par force centrifuge et à décolmatage automatique permettant de retenir les grosses, moyennes, fines et trés fines poussières ou particules contenues dans l'air.

On connaît des dépoussiéreurs d'air à pré-séparation cyclonique et à décolmatage automatique par injection d'air à contre courant au travers de manches filtrantes contenues dans une cheminée d'évacuation, notamment celui correspondant au brevet n° 74 41654 au nom du demandeur comportant une chambre cylindrique prolongée en sa partie inférieure par un cône tandis qu'en sa partie supérieure pénètre une enveloppe cylindrique concentrique servant de cheminée et contenant les éléments filtrants et le dispositif rotatif de décolmatage à injection d'air à contre courant au travers desdits éléments filtrants. L'air chargé de particules ou poussières propulsé ou aspiré pénètre dans la chambre tangentiellement, il effectue une trajectoire concentrique descendante et périphérique dans le bas du cône qui a pour effet de le repousser vers la colonne centrale où il effectue une remontée à l'aplomb de la cheminée contenant les éléments filtrants. Durant la trajectoire concentrique descendante les particules contenues dans l'air par l'action de la force centrifuge se bloquent sur les parois inferieures tant de la partie cylindrique que conique et sont concentrées au fur et à mesure vers l'écluse d'évacuation disposée en partie basse du cône.

Ce genre de dépoussiéreur d'air est encombrant notamment en hauteur alors qu'un volume important est perdu au niveau du cône.

2

L'invention a pour but de palier à cet inconvénient.

L'invention a en conséquence pour objet un dépoussiéreur d'air à pré-séparation des particules par force centrifuge et à décolmatage automatique par injection d'air à contre courant comportant un cylindre extérieur obturé en sa partie basse par un fond plat et/ou conique et concave tandis qu'en sa partie supérieure pénètre une enveloppe cylindrique concentrique contenant les éléments filtrants et le dispositif rotatif de distribution d'air de décolmatage insufflé à contre courant, la partie inférieure ouverte de l'enveloppe pénétrante est décalée du fond du cylindre extérieur de manière que l'air propulsé ou aspiré pénétrant tangentiellement à l'intérieur du cylindre effectue à l'intérieur de celui-ci une double trajectoire, l'une périphérique descendante dont l'action de la force centrifuge a pour effet de séparer et plaquer sur les parois une partie des particules ou poussières et l'autre montante et centrale à l'aplomb de l'ouverture basse de l'enveloppe concentrique contenant les éléments filtrants au travers desquels durant son passage, l'air est débarrassé des particules ou poussières restantes, les particules ou poussières sont évacuées au travers d'une buse d'éjection placée tangentiellement à la paroi du cylindre en partie basse ou au travers d'un orifice placé à même le fond.

Afin de parfaire à l'évacuation des particules ou poussières en partie basse et de sorte qu'en toute circonstance le débit de sortie des particules ou poussières soit régulier, un ou des bras rotatifs sont disposés au centre du dépoussiéreur de sorte à balayer et égaliser les particules ou poussières sur ledit fond et rassembler ces dernières à l'aplomb de l'orifice d'éjection.

D'autres caractéristiques et avantages de l'invention ressortiront plus clairement de la description qui va suivre faite en regard des dessins joints donnés à titre d'exemple non limitatif, où :

      - la figure 1 représente en coupe un dépoussiéreur à fond plat.

      - la figure 2, représente en coupe un dépoussiereur à fond conique concave.

3

- la figure 3, une vue du fond avec buse d'éjection placée tangentiellement.

- la figure 4, une vue du fond avec orifice placé à même le fond.

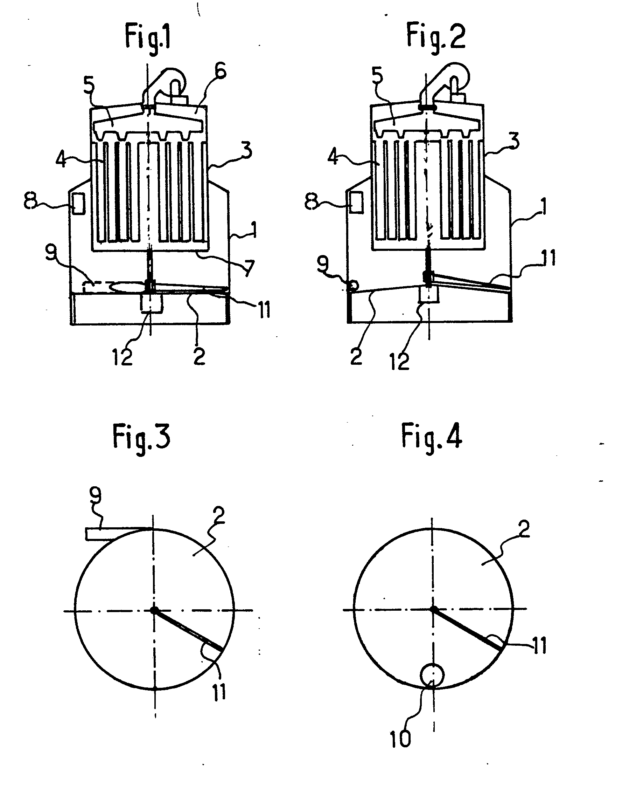

Tel que représenté figure 1, le dépoussiéreur comporte un cylindre extérieur 1 obturé en sa partie basse par un fond 2 horizontal, en la partie supérieure du cylindre 1 pénètre une enveloppe concentrique 3 contenant les éléments filtrants 4 et le dispositif rotatif 5 de distribution d'air de décolmatage insufflé à contre courant et disposé en la partie supérieure 6, en sa partie inférieure 7, l'enveloppe concentrique 3 ouverte est décalée du fond 2 de telle sorte que l'air propulsé ou aspiré chargé de poussières ou particules pénétrant par une entrée d'air 8 disposée tangentiellement au cylindre extérieur 1 effectue une double trajectoire, l'une périphérique descendante dont l'action de la force centrifuge a pour effet de plaquer et concentrer une partie des poussières ou particules sur la paroi intérieure du cylindre 1 et ce jusqu'à ce que la trajectoire descendante de l'air atteigne le fond 2 lui faisant modifier sa trajectoire par une trajectoire ascendante centrale vers la partie inférieure 7 de l'enveloppe concentrique 3 contenant les éléments filtrants 4 au travers desquels il passe et est déchargé des poussières ou particules résiduelles avant d'être évacué dans l'atmosphère en la partie supérieure 6 de l'enveloppe 3. Au fur et à mesure de la concentration des poussières et particules sur la paroi intérieure du cylindre 1,ces dernières de par leur masse glissent jusqu'au fond 2 du dépoussiéreur, elles sont évacuées en continu au moyen d'une buse d'éjection 9 placée tangentiellement à la paroi du cylindre 1 au niveau du fond 2 comme représenté figure 3, ou comme représenté figure 4, au moyen d'un orifice d'éjection 10 place sur le fond 2, ledit orifice 10 étant disposé sensiblement tangent à la périphérie du cylindre 1.

Afin de favoriser et parfaire l'évacuation des particules ou poussières et de sorte qu'en toutes circonstances le débit de sortie des particules ou poussières soit régulier au travers de la buse d'ejection 9 ou orifice 10, tant celles extraites par force centrifuge que celles retenues par les elements

4

filtrants 4 et détachées desdits éléments par l'air injecté à contre courant au travers desdits éléments, ou celles se détachant des éléments filtrants lors de l'arrêt de l'aspiration ou propulsion de l'air chargé de particules, au moins un bras rotatif 11 est disposé sur le fond 2, il sert à balayer ledit fond et à égaliser les particules ou poussières qui sont évacuées de manière continue au travers des orifices 9 ou 10 grâce à la pression régnant à l'intérieur du dépoussiéreur, le ou les bras rotatifs étant entraînés par un moto-réducteur indépendant 12 placé au centre du fond 2.

Selon la réalisation représentée figure 2, celle-ci diffère de celle représentée figure 1 au niveau du fond 2, celui-ci est conique et concave ce qui permet durant la rotation du ou des bras 11 de concentrer sur le pourtour du cylindre 1 les poussières ou particules et plus particulièrement face à la buse d'éjection 9 ou à l'orifice 10.

1

## Revendications

1°) Dépoussiéreur d'air à pré-séparation des particules par force centrifuge et à décolmatage automatique comportant un cylindre extérieur dans la partie supérieure duquel pénètre une enveloppe cylindrique concentrique ouverte en sa partie basse contenant les éléments filtrants et le dispositif rotatif de distribution d'air de décolmatage, caractérisé par le cylindre extérieur obturé en sa partie basse par un fond plat ou conique concave décalé de l'ouverture basse de l'enveloppe concentrique comportant les éléments filtrants de sorte que l'air propulsé ou aspiré pénétrant tangentiellement à l'intérieur du cylindre effectue une double trajectoire, l'une périphérique descendante durant laquelle une pré-séparation des particules ou poussières par force centrifuge a lieu et l'autre montante à l'aplomb de l'ouverture basse de l'enveloppe concentrique contenant les éléments filtrants débarrassant l'air du reste des particules lors de son passage au travers desdits éléments filtrants avant son évacuation dans l'atmosphère, les particules ou poussières séparées étant évacuées de manière régulière et continue au travers d'un orifice aménagé en partie basse sur le fond ou sur la paroi cylindrique.

2°) Dépoussiéreur d'air selon la revendication 1 caractérisé par l'évacuation des particules ou poussières de manière continue et régulière au travers d'un orifice au moyen de la pression régnant à l'intérieur du dépoussiéreur et d'au moins un bras rotatif disposé sur le fond mû par un motoréducteur indépendant égalisant les poussières ou particules sur ledit fond.

3°) Dépoussiéreur d'air selon la revendication 1 caractérisé par l'orifice d'évacuation étant une buse d'éjection placée tangentiellement à la paroi du cylindre extérieur ou un orifice d'éjection aménagé à même le fond sensiblement tangent à la périphérie du cylindre extérieur.

0015847

Fig.1   Fig.2

Fig.3   Fig.4

0015847

| Office européen des brevets | **RAPPORT DE RECHERCHE EUROPEENNE** | Numéro de la demande |
|---|---|---|
| | | EP 80 40 0304 |

| | **DOCUMENTS CONSIDERES COMME PERTINENTS** | | **CLASSEMENT DE LA DEMANDE (Int. Cl. ³)** |
|---|---|---|---|
| Catégorie | Citation du document avec indication, en cas de besoin, des parties pertinentes | Revendication concernée | B 01 D 50/00 45/18 46/04 |
| D | FR - A - 2 290 939 (H. DURAND)<br>* Figures 1-4; page 4, ligne 2 - page 5, ligne 16 * | 1 | |
| | GB - A - 1 396 853 (ASBESTOS GRADING EQUIPMENT COMP.)<br>* Figures 1,2; page 2, lignes 10-84 * | 1 | |
| A | CH - A - 524 386 (MEYER MASCHINEN- UND MUHLENBAU A.G.) | | **DOMAINES TECHNIQUES RECHERCHES (Int. Cl. ³)** |
| A | DE - A - 2 441 848 (H.J. TITUS) | | B 01 D 50/00 46/00 45/00 |
| A | US - A - 3 648 442 (R.F. BOURNE) | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-04-1980 | BOGAERTS |

OEB Form 1503.1 06.78